# EUROPÄISCHE PATENTSCHRIFT

(11) **EP 1 199 119 B1**
(45) Veröffentlichungstag und Bekanntmachung des Hinweises auf die Patenterteilung: **10.03.2010**
(21) Anmeldenummer: 01122725.3
(22) Anmeldetag: 21.09.2001
(51) Int. Cl.: B21H 1/18, B21H 7/00

(54) **Niet- Herstellungsvorrichtung und Verfahren zur Herstellung von Nieten**
Device and method for manufacturing rivets
Dispositif et procédé de fabrication de rivets

(30) Priorität: 19.10.2000 DE 10051866
(43) Veröffentlichungstag der Anmeldung: 24.04.2002
(73) Patentinhaber: Schmitz, Hans-Gert, 42499 Hückeswagen (DE); Kirsch, Jürgen, 42499 Hückeswagen (DE)
(72) Erfinder: Schmitz, Hans-Gert, 42499 Hückeswagen (DE); Kirsch, Jürgen, 42499 Hückeswagen (DE)
(74) Vertreter: Müller, Enno

(56) Entgegenhaltungen:
- DE-A- 10 008 659
- US-A- 1 890 693
- US-A- 2 060 087
- US-A- 3 602 025
- US-A- 3 679 344
- US-A- 3 889 516
- US-A- 4 084 303
- US-A- 5 509 287
- US-A- 5 957 777

## Beschreibung

Die Erfindung betrifft zunächst ein Niet-Herstellungsvorrichtung und ein Verfahren zur Herstellung von Nieten.

Bei einem bekannten Niet-Herstellungsvorrichtung und einem entsprechenden Verfahren siehe etwa US 5,957,777 A1, wird der Niet mittels relativ zueinander bewegter Flachwerkzeuge im Walzverfahren hergestellt. Darüber hinaus ist es aus der US 4,084,303 bekannt, zum Abtrennen von walzenartigen Werkstücken aus einem stangenartigen Rohling an einem oder zwei miteinander in einem Werkzeugspalt zusammenwirkenden Werkzeugen schraubengangartig umlaufende Trenrisekuneiden auszubilden. Aus der US 1,890,693 A1 ist es bekannt, zur Herstellung von Stahlkugeln zwei an Rotationsachsen umlaufende Umformwerkzeuge, von denen eines rotatorisch angetrieben ist, vorzusehen, wobei die Werkzeuge einen Walzspalt bilden und in jedem der Werkzeuge zugeordnete Walzkonturen ausgebildet sind, wobei die Walzkonturen schraubengangartig umlaufen, ohne Unterbrechung, unter Wandlung von einer Werkstück-Anfangskontur zu einer Werkstück-Endkontur, und wobei seitliche Werkstück-Abstützungen vorgesehen sind, wobei die Umformwerkzeuge übereinander angeordnet sind, so dass eines der Werkzeuge die unterseitige Abstützung erbringt, und wobei zudem die Werkzeugachsen parallel zueinander verlaufen. Die Erfindung beschäftigt sich mit der Aufgabe, ein vorteilhaftes Niet-Herstellungsvorrichtung anzugeben sowie ein vorteilhaftes Verfahren zur Herstellung von Nieten.

Diese Aufgabe ist beim Gegenstand des Anspruches 1 bzw. des Anspruches 8 gelöst. Die schraubengangartig umlaufende Walzkontur von einer Werkstück-Anfangskontur zu einer Werkstück-Endkontur lässt ohne Unterbrechung den gesamten Formungsvorgang von der Anfangskontur, dem Rohmaß, bis zu einer Niet-Endkontur, dem Endmaß, in dem Werkzeug durchführen. Das Rohmaß kann hierbei sehr viel größer gewählt werden, als es bei herkömmlichen Werkzeugen der Fall ist. Der Transport des Werkstückes ergibt sich von selbst durch die schraubengangartig umlaufende Kontur.

In den Walzspalt der parallel zueinander verlaufenden Rotationsachsen der Umformwerkzeuge wird das Werkstück auf einer Seite eingeben. Es ergibt sich sogleich eine Selbstanziehung durch das Werkzeug und im Folgenden ein selbsttätiger Transport über die Länge des Walzspaltes und aus dem Walzspalt wieder heraus. Hierzu ist es vorteilhaft, wenn die Werkzeuge im Einzugsbereich jeweils eine Greifbeschichtung aufweisen. Die Greifbeschichtung kann unterschiedlich ausgebildet sein, bspw. in Form einer Diamantsplitterbeschichtung, wie dies etwa von Nagelfeilen bekannt ist.

Unterhalb des Walzspaltes ist eine Werkstückabstützung ausgebildet. Diese ist bevorzugt schneidenartig. Andererseits kann je nach Geometrie des gewalzten Werkstückes eine besondere Anpassung erforderlich oder jedenfalls nützlich sein.

Wesentlich ist auch, dass das Werkzeug eine Trennschneide ausbildet, zur Vereinzelung eines zunächst von einem Stangenrohling ausgehend umgeformten Werkstücks. Die Trennschneide ist geeigneterweise als Randbegrenzung einer Walzkontur vorgesehen. In die Vorrichtung kann also ein Stangenrohling gegeben werden, bzw. dieser wird von den Werkzeugen eingezogen, von dem dann abtrennend bzw. zunehmend abtrennend eine Auswalzung eines einzelnen Werkstückes erfolgt. Geeigneterweise erfolgt die letztliche Abtrennung erst im Bereich des letzten oder vorletzten Gewindeganges, in Durchsetzungsrichtung des Werkstückes durch die Vorrichtung gesehen.

Weiter ist von Bedeutung, dass während des Transports die Umformung bis auf Fertigmaß vorgenommen wird.

Darüber hinaus ist auch von Bedeutung, dass die Umformkontur Übergangslos vom Rohmaß bis zum Fertigmaß ausgebildet wird.

Weiter ist auch verfahrensmäßig von Bedeutung, dass der Werkstückrohling stangenartig oder rohrartig ausgebildet ist, und dass durch eine an dem Werkzeug ausgeformte Trennschneide zugleich beim Durchsetzen des Werkstücks durch das Werkzeug eine Werkstücktrennung vorgenommen wird.

Die Profilierung kann auch nur auf einer Teilabscbnittslänge vorgesehen sein. Sie kann symmetrisch auf beiden Werkzeugen vorgesehen sein oder unsymmetrisch auf dem einen oder anderen Werkzeug.

Nachstehend ist die Erfindung des Weiteren anhand der beigefügten Zeichnung, die jedoch lediglich ein Ausführungsbeispiel darstellt, erläutert. Hierbei zeigt:
- Fig. 1: eine Ansicht von oben der zugeordneten Werkzeuge, wobei eines der Werkzeuge geschnitten dargestellt ist;
- Fig. 2: eine Vorderansicht der Werkzeuge;
- Fig. 3: einen Querschnitt durch das Werkzeug 3, geschnitten entlang der Linie III-III;
- Fig. 4: ein Beispiel eines konturierten Niets, hergestellt mit einem Werkzeug gemäß den Figuren 1 bis 3 und
- Fig. 5: einen Querschnitt durch den Niet gemäß Fig. 4, geschnitten einer Linie V-V.

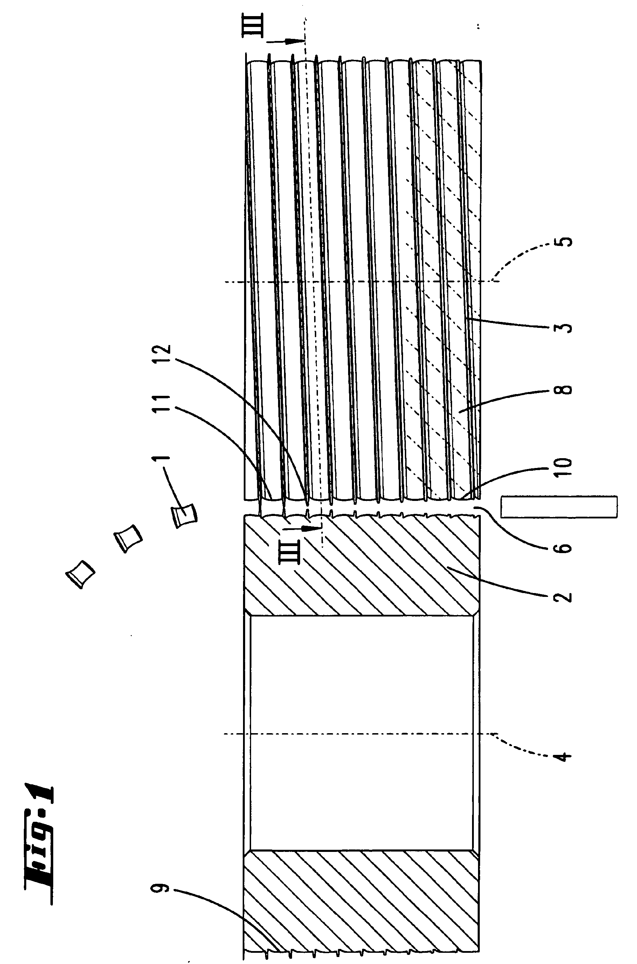

Dargestellt und beschrieben ist, zunächst mit Bezug zu Fig. 1, eine Vorrichtung zur Herstellung von Umformteilen wie beispielsweise einem Niet 1. Die Vorrichtung weist zwei rotatorisch angetriebene (der Antrieb ist nicht gesondert dargestellt) Umformwerkzeuge 2, 3 auf, die um Rotationsachsen 4, 5 umlaufen. Die Rotationsachsen verlaufen horizontal und parallel zueinander.

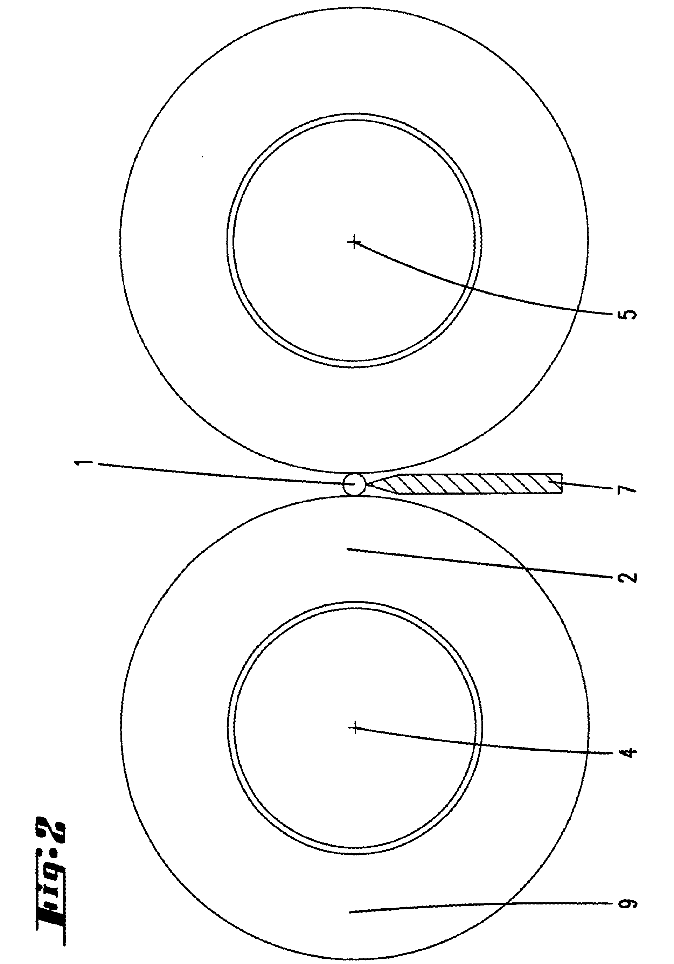

Die Werkzeuge 2, 3 bilden weiter einen Walzspalt 6 aus, der unterseitig eine Werkstückabstützung 7 (vergl. Fig. 2) besitzt. Die Werkstückabstützumg 7 ist schneidenartig, an ihrem oberen Ende, ausgebildet.

Die Werkzeuge 2 , 3 weisen des Weiteren schraubengangartig umlaufende Walzkonturen 8, 9 auf.

Wie aus Fig. 1 ersichtlich, bildet eine Walzkontur 8 kontinuierlich ein Eingangsprofil 10 bis hin zu einem Endmaßprofil 11 aus. Durch die Profilierung wird ein Werkstück in den Walzspalt, sobald es die Werkzeuge 2, 3 berührt, aktiv eingezogen und durch den Walzspalt hindurch transportiert. Am Ende wird das Werkstück 1 auch sogleich selbsttätig aus der Vorrichtung ausgestoßen.

Von Bedeutung ist auch, dass die Vorrichtung - kontinuierlich anwachsende - als Langrandbegrenzung einer Walzkontur angeordnet. Trennschneiden 12 ausformt, die dazu führen, dass ein einzelnes Werkstück schließlich abgetrennt von den weiteren Werkstücken bzw. dem Rohling aus der Vorrichtung, nach Beendigung des Walzvorganges, ausgestoßen wird. Die Trennschneiden 12 sind beim Ausführungsbeispiel zugleich die Begrenzungen zwischen zwei nebeneinander liegenden Walzkonturen.

Im Übrigen ist von Bedeutung, dass das Werkzeug im Einzugsbereich (vergleiche schraffierten Bereich im rechten Werkzeug in Fig. 1) eine Diamantbeschichtung aufweist. Wie ersichtlich, kann sich die Diamantbeschichtung geeigneterweise über zwei oder drei Gewindegänge, in Tiefenrichtung des Werkzeugs gesehen, erstrekken.

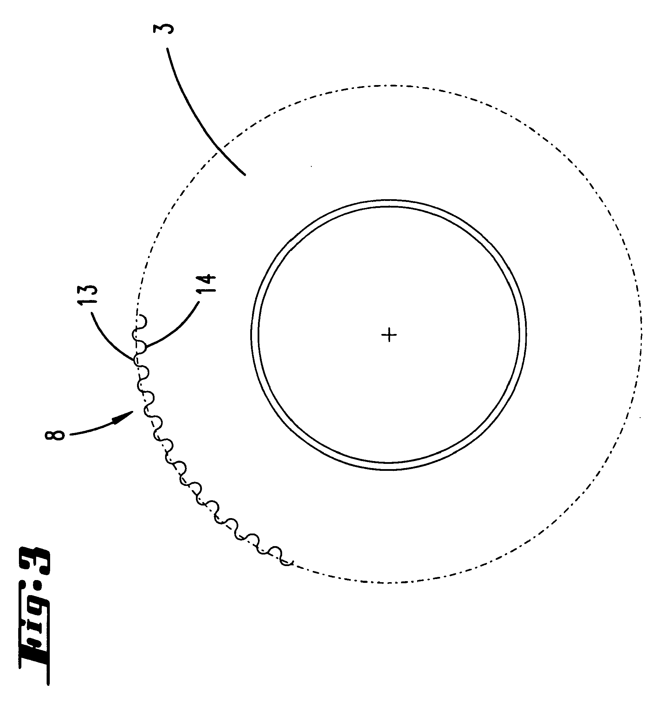

Aus der Darstellung in Fig. 3 ist ersichtlich, dass eine Walzkontur 8, über ihre Länge, d.h. folgend dem Gewindegang, profiliert ausgebildet ist. Es sind beispielsweise aufeinander abfolgende Berge 13 und Täler 14 zu erkennen.

Die Profilierung ist über die gesamte Länge einer Walzkontur 8 vorgesehen. Bevorzugt aber auch nur über einen Teilbereich, insbesondere den, in Durchsetzungsrichtung eines Werkstückes gesehen, End-Teilbereich der Walzkontur, da erst zum Ende der Umformung dann dem Werkstück diese Konturierung aufgeprägt wird.

Weiter kann die Walzkonturierung symmetrisch bezüglich beider Werkzeuge vorgesehen sein, aber auch unsymmetrisch.

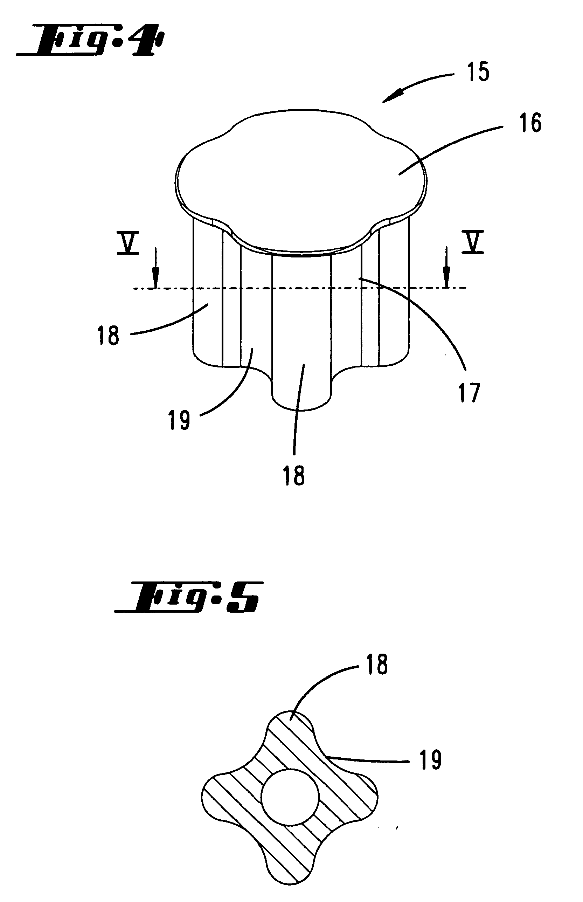

In den Figuren 4 und 5 ist ein Beispiel eines werkstükkes, hier ein Niet 15, dargestellt, das mit einem solchen Werkzeug hergestellt werden kann. Der Niet weist einen Nietkopf 16 und einen Nietschaft 17 auf. Der Nietschaft 17 ist in seinem Querschnitt, vergleiche insbesondere Fig. 5, unrund ausgebildet. Es sind im Querschnitt vorstehende Ausformungen 18 und Einbuchtungen 19 in Abfolge zu erkennen. Diese Konturierung lässt sich mit der bezüglich Fig. 3 beschriebenen Profilierung im Walzverfahren erreichen.

## Patentansprüche

1. Niet-Herstellungsvorrichtung (1) mit zwei an Rotationsachsen umlaufenden Umformwerkzeugen (2, 3) von denen mindestens eines rotatorisch angetrieben ist, wobei die Werkzeuge (2, 3) einen Walzspalt (6) bilden und in jedem der Werkzeuge (2, 3) zugeordnete Walzkonturen ausgebildet sind, wobei weiter die Walzkonturen schraubengangartig umlaufen, ohne Unterbrechung, unter Wandlung von einer Werkstück-Anfangskontur zu einer Werkstück-Eztdkontur, wobei weiter unterseitig des Walzspaltes (6) eine Werkstück-Abstützung (7) ausgebildet ist und die Werkzeugachsen parallel zueinander verlaufen, und wobei darüber hinaus die Walzkonturen (8, 9) über ihre Länge profiliert sind.

2. Vorrichtung nach Anspruch 1, **dadurch gekennzeichnet, dass** der Walzspalt (6) horizontal verläuft.

3. Vorrichtung nach einem der vorhergehenden Ansprüche, **dadurch gekennzeichnet, dass** das Werkzeug (2, 3) im Einzugsbereich eine Greifbeschichtung aufweist.

4. Vorrichtung nach Anspruch 3, **dadurch gekennzeichnet, dass** die Greifbeschichtung durch Diamantsplitter gebildet ist.

5. Vorrichtung nach einem der Ansprüche 1 bis 4, **dadurch gekennzeichnet, dass** die Werkstückabstützung (7), dem Walzspalt (6) zugeordnet, schneidenartig ausgeformt ist.

6. Vorrichtung nach einem der Ansprüche 1 bis 5, **dadurch gekennzeichnet, dass** das Werkzeug (2, 3) eine Trennschneide (12) ausbildet zur Vereinzelung eines zunächst von einem Stangenrohling ausgehend umgeformten Werkstückes (1).

7. Vorrichtung nach einem der Ansprüche 1 bis 6, **dadurch gekennzeichnet, dass** die Profilierung nur auf Teilabschnitten der Länge der Walzkontur ausgebildet ist.

8. Verfahren zur Herstellung von Nieten in einer Vorrichtung mit zwei um Drehachsen umlaufende, zugeordnete Umformwerkzeuge, von denen mindestens eines rotatorisch angetrieben ist, wobei weiter ein Werkstück im Spalt zwischen den Werkzeugen durch in den Werkzeugen ausgebildete, zugeordnete schraubengangartige Umformkonturen transportiert wird, bei parallel zueinander verlaufenden Drehachsen, wobei weiter mit einer unterbrechungsfreien Walzkontur der gesamte Formungsvorgang von der Anfangskontur, dem Rohmaß, bis zu einer Werkstückendkontur, dem Fertigmaß, während des Transports in dem Spalt durchgeführt wird, und wobei darüber hinaus die Umformung mittels über ihre Länge profilierte Walzkonturen der beiden Werkzeuge durchgeführt wird.

9. Verfahren nach Anspruch 8, **dadurch gekennzeichnet, dass** die Umformkontur übergangslos vom Rohmaß bis zum Fertigmaß ausgebildet wird.

10. Verfahren nach einem der Ansprüche 8 oder 9, **dadurch gekennzeichnet, dass** der Werkstückrohling stangenartig oder rohrartig ausgebildet ist und dass durch eine an dem Werkzeug ausgeformte Trennschneide zugleich beim Durchsetzen des Werkstücks durch das Werkzeug eine Werkstücktrennung vorgenommen wird.

## Claims

1. Device (1) for manufacturing rivets, comprising two shaping tools (2, 3) rotating about axes of rotation, at least one of which tools is driven in a rotatory manner, wherein the tools (2, 3) form a roller gap (6) and associated roller contours are formed in each of the tools (2, 3), the roller profiles also rotating continuously in the manner of a screw thread, the initial contour of a workpiece changing into the final contour of said workpiece, a workpiece support (7) further being formed below the roller gap (6) and the axes of the tools extending parallel to one another, and the roller contours (8, 9) also being profiled along their length.

2. Device according to claim 1, **characterised in that** the roller gap (6) extends horizontally.

3. Device according to any one of the preceding claims, **characterised in that** the tool (2, 3) comprises a grip coating in the feed region.

4. Device according to claim 3, **characterised in that** the grip coating is formed by diamond fragments.

5. Device according to any one of claims 1 to 4, **characterised in that** the workpiece support (7) is associated with the roller gap (6) and is blade-shaped.

6. Device according to any one of claims 1 to 5, **characterised in that** the tool (2, 3) forms a separating blade (12) for separating a workpiece (1) which is initially shaped by a cylindrical blank.

7. Device according to any one of claims 1 to 6, **characterised in that** only portions along the length of the roller contour are profiled.

8. Method for producing rivets in a device comprising two associated shaping tools rotating about axes of rotation, of which tools at least one is driven in a rotatory manner, wherein a workpiece is also transported in the gap between the tools by associated shaping contours in the form of screw threads formed in the tools, the axes of rotation extending parallel to one another, the entire shaping process further being carried out with a continuous roller contour from the initial profile (the initial size) to a final workpiece profile (the final size) during transportation in the gap, and the shaping process further being carried out by roller contours of the two tools, said roller contours being profiled along their length.

9. Method according to claim 8, **characterised in that** the shaping contour is formed seamlessly from the initial size to the final size.

10. Method according to either claim 8 or claim 9, **characterised in that** the workpiece blank is rod-shaped or tubular, and **in that** a workpiece is separated by a separating blade formed on the tool when said workpiece is formed by the tool.

## Revendications

1. Dispositif de fabrication de rivets (1), comprenant deux outils de reformage (2, 3), tournant sur des axes de rotation, outils dont au moins l'un est entraîné en rotation, les outils (2, 3) formant une emprise entre rouleaux (6) et, dans chacun des outils (2, 3), étant réalisés des contours de laminage associés, en outre les contours de laminage tournant à la manière d'un pas de vis, sans interruption, en convertissant d'un contour initial de pièce d'oeuvre à un contour final de pièce d'oeuvre, en outre, côté inférieur de l'emprise entre rouleaux (6) étant réalisé un appui pour pièce d'oeuvre (7), et les axes d'outil s'étendant parallèlement entre eux et, de plus, les contours de rouleaux (8, 9) étant profilés sur leur longueur.

2. Dispositif selon la revendication 1, **caractérisé en ce que** l'emprise entre rouleaux (6) s'étend horizontalement.

3. Dispositif selon l'une des revendications précédentes, **caractérisé en ce que** l'outil (2, 3) présente un revêtement d'accrochage dans la zone d'introduction.

4. Dispositif selon la revendication 3, **caractérisé en ce que** le revêtement d'accrochage est formé par des éclats de diamant.

5. Dispositif selon l'une quelconque des revendications 1 à 4, **caractérisé en ce que** l'appui pour pièce d'oeuvre (7) est formé à la manière d'un tranchant, associé à l'emprise entre rouleaux (6).

6. Dispositif selon l'une quelconque des revendications 1 à 5, **caractérisé en ce que** l'outil (2, 3) constitue un tranchant de découpage (12), pour individualiser une pièce d'oeuvre (1) en partant d'abord d'une ébauche de barre.

7. Dispositif selon l'une quelconque des revendications 1 à 6, **caractérisé en ce que** le profilage n'est réalisé que sur des tronçons partiels de la longueur du contour de rouleau.

8. Procédé de fabrication de rivets, dans un dispositif comprenant deux outils de reformage associés, tournant sur des axes de rotation, outils dont au moins l'un est entraîné en rotation, une pièce d'oeuvre étant transportée dans l'intervalle existant entre les outils, au moyen de contours de reformage associés, du genre de pas de vis, réalisés dans les outils, dans le cas d'axes de rotation s'étendant parallèlement entre eux, où, en outre, avec un contour de rouleau exempt d'interruption, l'ensemble du processus de formage, à partir du contour initial, la dimension brute, jusqu'à un contour final de pièce d'oeuvre, la dimension finale d'usinage, étant effectué pendant le transport dans l'intervalle d'emprise, et, de plus, le reformage étant effectué au moyen de contours de rouleaux, profilés sur leur longueur, des deux outils.

9. Procédé selon la revendication 8, **caractérisé en ce que** le contour de reformage est réalisé, sans transition, de la dimension brute à la dimension finale d'usinage.

10. Procédé selon l'une des revendications 8 ou 9, **caractérisé en ce que** l'ébauche de pièce d'oeuvre est réalisée à la manière d'une barre ou à la manière d'un tube, et **en ce que**, au moyen d'un tranchant formé sur l'outil, en même temps, une séparation des pièces d'oeuvre est effectuée lors du passage de la pièce d'oeuvre par l'outil.
